# EUROPEAN PATENT APPLICATION

(11) **EP 4 668 123 A1**
(43) Date of publication of application: **24.12.2025**
(21) Application number: 25153396.4
(22) Date of filing: 22.01.2025
(51) Int. Cl.: G06F 12/122, G06F 12/123

(54) **METHOD AND APPARATUS FOR EVICTING CACHED DATA, ELECTRONIC DEVICE, AND STORAGE MEDIUM**

(30) Priority: 20.06.2024 CN 202410805541
(71) Applicant: Beijing Volcano Engine Technology Co., Ltd., Beijing 100190 (CN)
(72) Inventor: SONG, Zhenhua, Singapore (SG)
(74) Representative: Marks & Clerk LLP

(57) **Abstract**

The disclosed embodiments provide a method and an apparatus for evicting cached data, an electronic device, and a storage medium. The method comprises: acquiring (S101) a cached metadata item in a real-time weight queue, wherein the cached metadata item comprise a cached weight value; assigning (SI02) the cached metadata item to a cached weight queue with a corresponding weight level based on the cached weight value in the cached metadata item; and in response to a cache eviction instruction, determining (S103) at least one target cached weight queue based on the weight levels, and evicting sequentially cached data items corresponding to target cached metadata items in the at least one target cached weight queue. By pre-assigning the cached metadata item to the cached weight queues with different weight levels, the cached data items corresponding to the cached metadata items can be directly evicted based on the weight level.

## Description

### FIELD

The embodiments of the disclosure relate to a field of computer technology, particularly to a method and an apparatus for evicting cached data, an electronic device, and a storage medium.

### BACKGROUND

Currently, cache technology is widely used in various fields of computer science. By setting and applying cache, it can effectively reduce the time required for loading data and improve efficiency for processing data. When there is an excessive amount of cached data, a system needs to promptly evict (also known as discard or recycle) some of the data in the cache to avoid depleting of resources of the cache space.

In the prior art, data is usually cached by setting a cache queue. Accordingly, when the cached data needs to be evicted, the data in the cache queue is usually analyzed and the cached data which is less frequently used is evicted.

However, the solutions in the prior art have problems such as low efficiency and untimely eviction of cached data.

### SUMMARY

The embodiments of the present disclosure provide a method and an apparatus for evicting cached data, an electronic device, and a storage medium to overcome the problems of low efficiency and untimely eviction of cached data.

In a first aspect, an embodiment of the present disclosure provides a method for evicting cached data. The method comprises: acquiring a cached metadata item in a real-time weight queue, wherein the cached metadata item comprise cached weight value, and the cached weight value is dynamically updated at least based on a number of access and/or time of access to a corresponding cached data item; assigning the cached metadata item to a cached weight queue with a corresponding weight level based on the cached weight value in the cached metadata item, wherein different weight levels correspond to different weight ranges of cached weight values; in response to a cache eviction instruction, determining at least one target cached weight queue based on the weight levels, and evicting sequentially cached data items corresponding to target cached metadata items in the at least one target cached weight queue.

In a second aspect, an embodiment of the present disclosure provides an apparatus for evicting cached data. The apparatus comprises: an acquiring module configured to acquire a cached metadata item in a real-time weight queue, wherein the cached metadata item comprises a cached weight value, and the cached weight value is dynamically updated at least based on a number of access and/or time of access to a corresponding cached data item; a processing module configured to assign the cached metadata item to a cached weight queue with a corresponding weight level based on the cached weight value in the cached metadata item, wherein different weight levels correspond to different weight ranges of cached weight values; an evicting module configured to determine, in response to a cache eviction instruction, at least one target cached weight queue based on the weight level, and evict sequentially cached data items corresponding to target cached metadata items in the at least one target cached weight queue.

In a third aspect, an embodiment of the present disclosure provides an electronic device. The electronic device comprises a processor and a memory. Wherein the memory stores computer-executable instructions. The processor executes the computer-executable instructions stored in the memory to cause at least one processor to execute the method for evicting cached data as described in the first aspect and various possible designs of the first aspect.

In a fourth aspect, an embodiment of the present disclosure provides a computer-readable storage medium storing computer-executable instructions, wherein the computer-executable instructions, when executed by a processor, implement the method for evicting cached data as described in the first aspect and various possible designs of the first aspect.

In a fifth aspect, an embodiment of the present disclosure provides a computer program product comprising a computer program, wherein the computer program, when executed by a processor, implement the method for evicting cached data as described in the first aspect and various possible designs of the first aspect.

The embodiments of the present disclosure provide a method and an apparatus for evicting cached data, an electronic device, and a storage medium. A cached metadata item in a real-time weight queue is acquired, wherein the cached metadata item comprises a cached weight value, and the cached weight value is dynamically updated at least based on a number of access and/or time of access to a corresponding cached data item. The cached metadata item is assigned to a cached weight queue with a corresponding weight level based on the cached weight value in the cached metadata item, wherein different weight levels correspond to different weight ranges of the cached weight values. In response to a cache eviction instruction, at least one target cached weight queue is determined based on the weight levels, and cached data items corresponding to target cached metadata items in the at least one target cached weight queue are evicted in sequence. By setting the real-time weight queue and pre-assigning the cached metadata item in the real-time weight queue to the cached weight queues with different weight levels, after receiving the cache eviction instruction, the cached data items corresponding to the cached metadata items in the cached weight queue can be directly evicted based on the weight level. On the one hand, since there is no need to perform real-time detection on the cached data items, the efficiency for evicting the cached data can be improved. On the other hand, since it is not limited by real-time, cached data items within a larger range can be selected for eviction, the effect for evicting the cached data can be improved.

### BRIEF DESCRIPTION OF THE DRAWINGS

In order to more clearly illustrate the embodiments of the present disclosure or the technical solutions in the prior art, the drawings required for use in the embodiments or the description of the prior art will be briefly introduced below. Obviously, the drawings described below are some embodiments of the present disclosure. For ordinary technicians in this field, other drawings can be obtained based on these drawings without paying creative labor.
FIG. 1 is a diagram of an application scenario of a method for evicting cached data according to an embodiment of the present disclosure;
FIG. 2 is a first flowchart of a method for evicting cached data according to an embodiment of the present disclosure;
FIG. 3 is a step of creating and/or updating a cached metadata item before the step S101;
FIG. 4 is a schematic diagram of a process of assigning cached metadata items according to an embodiment of the present disclosure;
FIG. 5 is a second flowchart of a method for evicting cached data according to an embodiment of the present disclosure;
FIG. 6 is a schematic diagram of pushing the cached metadata items to a first-level cached weight queue according to an embodiment of the present disclosure;
FIG. 7 is a flowchart of an implementation of the step S203 in the embodiment shown in FIG. 5;
FIG. 8 is a flowchart of a possible implementation of the step S205 in the embodiment shown in FIG. 5;
FIG. 9 is a flowchart of another possible implementation of the step S205 in the embodiment shown in FIG. 5;
FIG. 10 is a flowchart of an implementation of the step S206 in the embodiment shown in FIG. 5;
FIG. 11 is a schematic diagram of the structure of an apparatus for evicting cached data according to an embodiment of the present disclosure;
FIG. 12 is a schematic diagram of the structure of an electronic device according to an embodiment of the present disclosure;
FIG. 13 is a schematic diagram of the hardware structure of the electronic device according to an embodiment of the present disclosure.

### DETAILED DESCRIPTION OF EMBODIMENTS

In order to make the purpose, technical solution and advantages of the embodiments of the present disclosure clearer, the technical solution in the embodiments of the present disclosure will be clearly and completely described below in conjunction with the drawings in the embodiments of the present disclosure. Obviously, the described embodiments are part of the embodiments of the present disclosure, not all of the embodiments. Based on the embodiments in the present disclosure, all other embodiments obtained by ordinary technicians in this field without creative work are within the scope of protection of the present disclosure.

It should be noted that the user information (including but not limited to user device information, user personal information, etc.) and data (including but not limited to data used for analysis, stored data, displayed data, etc.) involved in this disclosure are all information and data authorized by the user or fully authorized by all parties. The collection, use and processing of relevant data must comply with the relevant laws, regulations and standards of relevant countries and regions, and corresponding operation entrances for users to choose to authorize or refuse are provided.

The application scenarios of the embodiments of the present disclosure are explained below.

The method for evicting the cached data provided in the embodiment of the present disclosure can be applied to the application scenario for caching data. Specifically, for example, the method can be applied to the caching of data in an application, such as the caching of data such as videos and pictures in a short video application. The subject for executing the embodiments can be a terminal device running the above-mentioned application, or a server providing data services for the application, or other electronic devices that perform similar functions. In some embodiments, the terminal device or server can implement the method for evicting the cached data provided in the embodiment of the present application by running various computer executable instructions or computer programs. For example, computer executable instructions can be program-level commands, machine instructions or software instructions. The computer program can be a native program or software module in the operating system; can also be a local application, that is, a program that needs to be installed in the operating system to run, or can be a small program embedded in any APP, that is, a program running based on a browser environment. The above-mentioned computer executable instructions can be instructions in any form, and the above-mentioned computer program can be an application, module or plug-in in any form, and the specific implementation form can be configured as needed. Furthermore, in some embodiments, the server may be an independent physical server, or a server cluster or distributed system composed of multiple physical servers, or a cloud server that provides basic cloud computing services such as cloud services, cloud storage, cloud communications, cloud databases, cloud computing, cloud functions, network services, middleware services, domain name services, security services, content delivery networks (CDNs), and big data and artificial intelligence platforms.

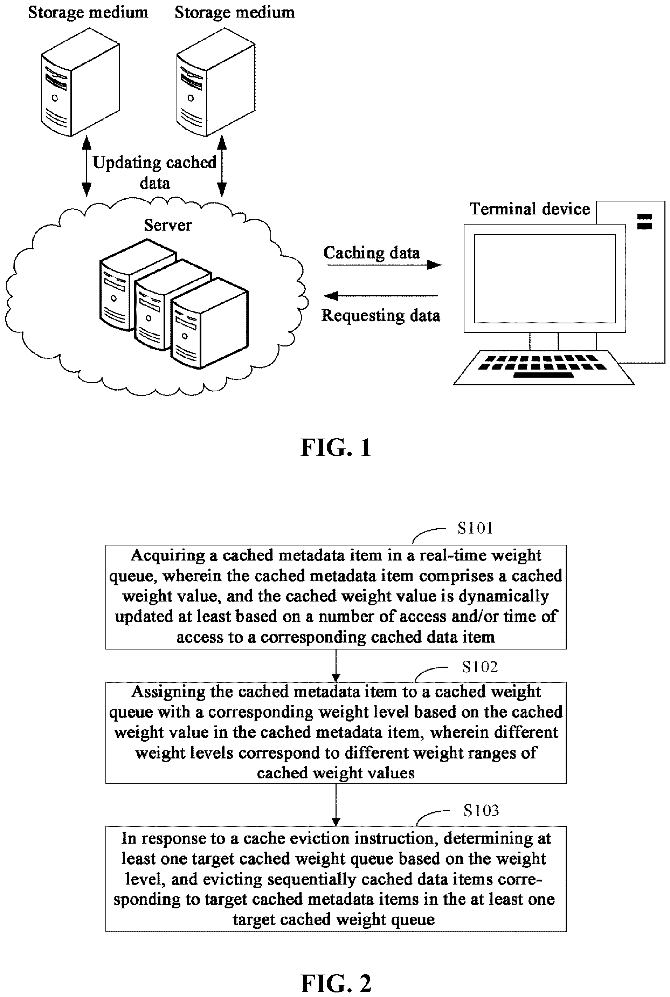

FIG. 1 is a diagram of an application scenario of the method for evicting the cached data according to an embodiment of the present disclosure. Referring to FIG. 1, taking a server as an example, the server may be a CDN server. The cached data is stored in the server. When the server receives a data request sent by a terminal device, if the data request hits the cached data, the corresponding cached data will be sent to the terminal device to achieve the purpose of providing data services. At the same time, the server will delete old data and acquire new data from other external storage media based on a preset cache strategy, to update the cached data, thereby improving the hit rate of the cached data stored therein and ensuring the effect of the data service.

When there is too much cached data, the system needs to evict some of the data in the cache timely. In order to avoid the depleting of resources of the cache space and affect the caching of subsequent new data, in the prior art, data is usually cached by setting the cache queue. Accordingly, when the cached data needs to be evicted, the data in the cache queue is usually analyzed and the cached data which is less frequently used is evicted. However, when the cache queue is long, real-time analysis and data selection for the cache queue will be more time-consuming and affect the efficiency of evicting the cached data. The timing of triggering eviction of the cached data is usually when resources of the cache space are relatively tight, so it has higher real-time requirements. In order to ensure real-time, the prior art usually intercepts the cached data of the most recent period from the complete cache queue for analysis and eviction, which further leads to the problem of poor effect on the eviction of the cached data.

The embodiments of the present disclosure provide the method for evicting the cached data to solve the above problem.

Referring to FIG. 2, FIG. 2 is a first flowchart of the method for evicting the cached data according to an embodiment of the present disclosure. The method of the embodiment can be applied to a server, a terminal device or other electronic device with a data caching function. The method for evicting the cached data includes the following.

Step S101: Acquiring a cached metadata item in the real-time weight queue, wherein the cached metadata item comprises a cached weight value, and the cached weight value is dynamically updated at least based on a number of access and/or time of access to a corresponding cached data item.

Exemplarily, referring to the schematic diagram of the application scenario shown in FIG. 1, in the embodiment, the case where the server is used as the executing subject is introduced. Specifically, the server, for example, maintains a queue (i.e., the real-time weight queue) for storing metadata corresponding to cached data by running a data cache server. Wherein cached metadata items are stored in the real-time weight queue, and the cached metadata items correspond to cached data items one by one. The cached data item is a piece of specific cached data, such as a video file or a picture file cached by the system. The cached data items can be stored in an additional storage space or medium. In the steps of the embodiment, operations other than eviction of the cached data items are not involved, thereby reducing the resource overhead of data operations. The cached metadata item contains the relevant attribute information of the cached data items. In an implementation, the cached metadata item includes, for example, the data identifier, storage location, and routing information of the cached data items. The cached metadata item also contains the cached weight value of the cached data items, which can be a specific value used to represent the cached priority of the cached data items. In an implementation, the larger the cached weight value is, the higher priority will be given to maintaining the cached data; and the smaller the cached weight value is, the higher priority will be given to evicting the cached data.

In an implementation, the method provided in the embodiment also includes the following. In response to determining that the first cached data item is received, a corresponding cached metadata item is initially created, and the cached weight value of the first cached data item is configured as a default weight value. The first cached data item is any of the cached data items. The number of access and/or time of access to the first cached data item are recorded dynamically. And the cached weight value of the first cached data item is updated dynamically based on the number and/or the time of the access to the first cached data item. The cached weight value is positively correlated with the number of the access and negatively correlated with a duration from the time of the access to current time. The cached weight value represents the probability that the cached data item needs to continue being cached. Specifically, the cached metadata item in the real-time weight queue is created when the cached data corresponding to the cached metadata item is used for the first time, and the cached metadata item is pushed to the tail of the real-time weight queue. Exemplarily, when the cached metadata item enters the real-time weight queue, it is assigned a default weight value, such as 0. As the cached data item corresponding to the cached metadata item gradually becomes hot, that is, the number /frequency of access increases, the weight value of the cached metadata item gradually increases. As the cached data item corresponding to the cached metadata item gradually becomes cold, that is, the number /frequency of access decreases, and the storage time increases, the duration from the time of the access to current time increases, and the weight value of the cached metadata item gradually decreases.

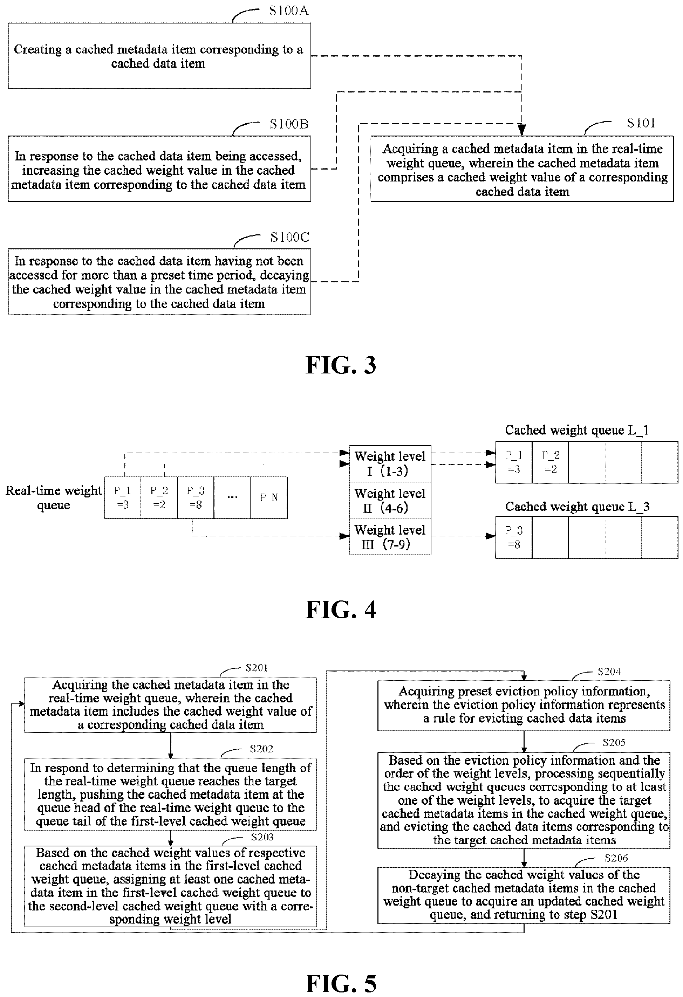

Furthermore, in the embodiment, before step S101, a step of creating and/or updating the cached metadata item is also included. Exemplarily, as shown in FIG. 3, at least one of the following is also included in the step.

Step S100A: Creating a cached metadata item corresponding to a cached data item.

Step S100B: In response to the cached data item being accessed, increasing the cached weight value in the cached metadata item corresponding to the cached data item.

Step S100C: In response to the cached data item having not been accessed for more than a preset time period, decaying the cached weight value in the cached metadata item corresponding to the cached data item.

It should be noted that the above steps S100A, S100B, and S100C can be executed multiple times, either sequentially or in parallel, and the corresponding order of the execution may also change. It can be understood that the above steps S100A, S100B, and S100C are steps that are executed independently and continuously, and are independent of whether other steps are executed. Furthermore, step S101 can be a step triggered based on a fixed time interval. After the above steps, the cached metadata item in the real-time weight queue will be in a dynamically changing state. Therefore, when the server executes step S101 and acquires the cached metadata item in the real-time weight queue, the cached metadata item can show the latest access status of the corresponding cached data items, thereby improving the effect on evicting cached data.

Step S102: Assigning the cached metadata item to the cached weight queue with the corresponding weight level based on the cached weight value in the cached metadata item, wherein different weight levels correspond to different weight ranges of the cached weight values.

Exemplarily, after the cached metadata item in the real-time weight queue are acquired, the server grades the respective cached metadata items based on the cached weight values in the cached metadata items, acquires the weight levels to which the respective cached metadata items belong, and then assigns the cached metadata item to the cached weight queue with corresponding weight level. At least two cached weight queues are maintained in the server, and each cached weight queue corresponds to a weight level. FIG. 4 is a schematic diagram of a process for assigning cached metadata item according to the embodiment of the present disclosure. As shown in FIG. 4, exemplarily, the real-time weight queue includes N cached metadata items, the cached metadata item P_1, the cached metadata item P_2, the cached metadata item P_3, ..., and the cached metadata item P_N, which respectively represent the cached data item p_1, the cached data item p_2, the cached data item p_3... and the cached data item p_N, a total of N cached data items. Exemplarily, the cached weight value contained in the cached metadata item P_1 is 3 (expressed as P_1 =3, the same below), the cached weight value contained in the cached metadata item P_2 is 2, and the cached weight value contained in the cached metadata item P_3 is 8. For example, according to the rule of grading weight levels that cached weight values 1-3 belong to the weight level I, cached weight values 4-6 belong to the weight level II, and cached weight values 7-9 belong to the weight level III, the cached metadata item P_1 and the cached metadata item P_2 correspond to the weight level I, and cached metadata item P_3 corresponds to the weight level III. Therefore, the cached metadata item P_1 and the cached metadata item P_2 are assigned to the cached weight queue L_1 corresponding to the weight level I, and the cached metadata item P_3 is assigned to the cached weight queue L_3 corresponding to the weight level III. That is, the cached metadata item P_1 and cached metadata item P_2 are pushed to the tail of the cached weight queue L_1, and the cached metadata item P_3 is pushed to the tail of the cached weight queue L_3.

Step S103: In response to a cache eviction instruction, determining at least one target cached weight queue based on the weight level, and evicting sequentially cached data items corresponding to target cached metadata items in the at least one target cached weight queue.

Exemplarily, after the execution of the step S102 is completed, when the server receives the cache eviction instruction, the server responds to it and starts to clear the above cached data items. The cache eviction instruction can be an instruction manually triggered by the user, or it can be a program instruction automatically executed by the server based on a preset program logic or operating system function under specific triggering conditions, such as when the cache space of the disk is detected to be too low, and there is no restriction here. After receiving and responding to the cache eviction instruction, the server sequentially access the cached weight queues based on the weight levels, and evicts the cached data items corresponding to the target cached metadata items in the cached weight queue. The target cache metadata can be all cache metadata in the cached weight queue, or it can be cache metadata that satisfies characteristic conditions, such as satisfying the condition that the cached weight value corresponding to the cache metadata is less than the corresponding weight threshold, satisfying the condition that the generation time corresponding to the cache metadata is less than the corresponding duration threshold, and so on.

For example, the cached weight queues in the server include the cached weight queue L_1 corresponding to the weight level I, the cached weight queue L_2 corresponding to the weight level II, and the cached weight queue L_3 corresponding to the weight level III. In an implementation, the server first clears the cached data items corresponding to the cached metadata items in the cached weight queue L_1 corresponding to the lowest weight level, i.e., the weight level I, according to the weight level. After the cached data items corresponding to the cached metadata items in the cached weight queue L_1 are cleared, if the stop condition is not met, the cached data items corresponding to the cached metadata items in the cached weight queue L_2 are cleared, and so on, until the stop condition is met. In another implementation, the cache eviction instruction includes a target weight level, and the server evicts data based on the target weight level. For example, if the cache eviction instruction includes the target weight level II, the server will, based on the target weight level, clear the cached data items corresponding to the cached metadata items in the cached weight queues with weight levels less than or equal to the target weight level, i.e., the cached weight queues L_1 and L_2, while the cached data corresponding to the cached metadata item in the cached weight queue L_3 corresponding to the weight level III will not be cleared.

Since the cached metadata item in the cached weight queue are assigned in advance, the respective cached data items are classified in advance. Therefore, after the cache eviction instruction is received, the cached data items corresponding to respective cached metadata items in the cached weight queue can be quickly evicted based on the pre-classification results, that is, based on the weight levels corresponding to the respective cached weight queues, thereby improving the efficiency of evicting the cached data.

In the embodiment, the cached metadata item in a real-time weight queue are acquired, wherein the cached metadata item comprises a cached weight value, and the cached weight value are dynamically updated at least based on a number of access and/or time of access to a corresponding cached data item. The cached metadata item is assigned to a cached weight queue with a corresponding weight level based on the cached weight value in the cached metadata item, wherein different weight levels correspond to different weight ranges of the cached weight values. In response to a cache eviction instruction, at least one target cached weight queue is determined based on the weight levels, and cached data items corresponding to target cached metadata items in the at least one target cached weight queue are evicted in sequence. By setting the real-time weight queue and pre-assigning the cached metadata item in the real-time weight queue to the cached weight queues with different weight levels, after receiving the cache eviction instruction, the cached data items corresponding to the cached metadata items in the cached weight queue can be directly evicted based on the weight level. On one hand, since there is no need to perform real-time detection on the cached data items, the efficiency for evicting the cached data can be improved. On the other hand, since it is not limited by real-time, the cached data items in a larger range can be selected for eviction, the effect for evicting the cached data can be improved.

Referring to FIG. 5, FIG. 5 is the second flowchart of the method for evicting cached data according to an embodiment of the present disclosure. Based on the embodiment shown in FIG. 2, the embodiment further refines the steps S102-S103. The cached weight queues in the embodiment include a first-level cached weight queue and at least one second-level cached weight queue. The method for evicting cached data includes the following.

Step S201: Acquiring the cached metadata item in the real-time weight queue, wherein the cached metadata item includes the cached weight value of a corresponding cached data item.

Step S202: In respond to determining that the queue length of the real-time weight queue reaches the target length, pushing the cached metadata item at the queue head of the real-time weight queue to the queue tail of the first-level cached weight queue.

Step S203: Based on the cached weight values of respective cached metadata items in the first-level cached weight queue, assigning at least one cached metadata item in the first-level cached weight queue to the second-level cached weight queue with a corresponding weight level.

Exemplarily, based on the introduction in the previous steps, when the cached data item is accessed, a corresponding cached metadata item is created and written to the tail of the real-time weight queue. Therefore, the queue length of the real-time weight queue will continue to increase until the preset target length is reached. Then the head of the real-time weight queue is connected to the first-level cached weight queue, so that the cached metadata item exceeding the target length enter the first-level cached weight queue. The target length is, for example, the total queue length of the real-time weight queue. That is, when the real-time weight queue is full, the cached metadata item written to the real-time weight queue at the earliest is pushed to the tail of the first-level cached weight queue, and thus written to the first-level cached weight queue.

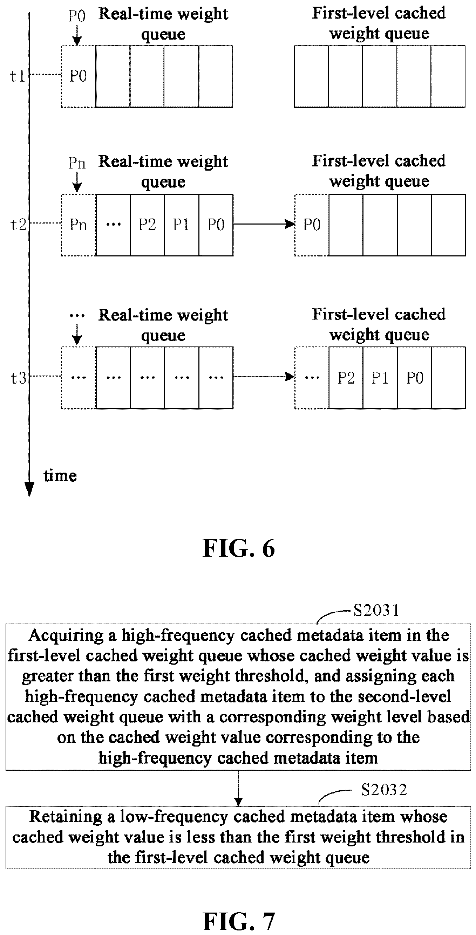

FIG. 6 is a schematic diagram of pushing the cached metadata item to the first-level cached weight queue according to the embodiment of the present disclosure. As shown in FIG. 6, at the time t1, the cached metadata item P0 is written into the real-time weight queue. At the time t2, the real-time weight queue is in a full state and receives new data to be written, i.e., Pn. At this time, the cached metadata item P0 that is earliest written into the real-time weight queue is pushed out from the head of the real-time weight queue and pushed into the queue tail of the first-level cached weight queue. Afterwards, as more cached metadata items (such as the cached metadata items P1 and P2 shown in the figure) are pushed out from the head of the real-time weight queue and enter the first-level cached weight queue in sequence from the tail of the first-level cached weight queue (such as at time t3 shown in the figure). The cached metadata item that enter the first-level cached weight queue in sequence are accumulated in the first cached weight queue, thereby achieving the purpose of writing data into the first cached weight queue.

Afterwards, the cached metadata items are graded by weight, based on the cached weight values of respective cached metadata items in the first-level cached weight queue. Then the cached metadata items are assigned to the second-level cached weight queue with a corresponding weight level. Therefore the cached metadata item are pre-graded.

In the embodiment, the first-level cached weight queue and the second-level cached weight queue are set, and after waiting for the cached metadata item in the real-time weight queue to enter the first-level cached weight queue, grading by weight is performed based on the first-level cached weight queue. This is equivalent to creating a protection period for the cached metadata item (the corresponding cached data item) that has just entered the real-time weight queue. This avoids the problem of data being misjudged as cold data due to the small number of access after the corresponding cached data items are just created, thereby improving the accuracy and effect of evicting the cached data.

Further, exemplarily, as shown in FIG. 7, the implementation of the step S203 includes the following.

Step S2031: Acquiring a high-frequency cached metadata item in the first-level cached weight queue whose cached weight value is greater than the first weight threshold, and assigning each high-frequency cached metadata item to the second-level cached weight queue with a corresponding weight level based on the cached weight value corresponding to the high-frequency cached metadata item.

Step S2032: Retaining a low-frequency cached metadata item whose cached weight value is less than the first weight threshold in the first-level cached weight queue.

Exemplarily, after the cached metadata item in the real-time weight queue enter the first-level cached weight queue, in order to make full use of the first-level cached weight queue, the cached weight values of respective cached metadata items in the first-level cached weight queue are traversed firstly, and the cached metadata item with cached weight value greater than (or equal to) the first weight threshold are determined as high-frequency cached metadata item. And the cached metadata item with cached weight value less than (or equal to) the first weight threshold is determined as low-frequency cached metadata item. Then the respective high-frequency cached metadata item will be assigned to the second-level cached weight queue with a corresponding weight level based on the cached weight value corresponding to the high-frequency cached metadata item. And the low-frequency cached metadata item will be retained in the first-level cached weight queue, which is equivalent to using the first-level cached weight queue as a cached weight queue further for a low weight level. Thus, the first-level cached weight queue can provide a protection period for the newly created cached metadata item, and the space utilization of the first-level cached weight queue is improved.

Step S204: Acquiring preset eviction policy information, wherein the eviction policy information represents a rule for evicting cached data items.

Step S205: Based on the eviction policy information and the order of the weight levels, processing sequentially the cached weight queues corresponding to at least one of the weight levels, to acquire the target cached metadata items in the cached weight queue, and evicting the cached data items corresponding to the target cached metadata items.

Exemplarily, after the cache eviction instruction is received, in an implementation, all target cached metadata items that meet the requirements in the cached weight queues can be evicted to complete the process of releasing cache space. However, the above scheme has the problem of over-release of cached data, which may affect the performance of applications and business functions. In response to the above problem, in another implementation, eviction policy information that represents the rules for evicting cached data items is first acquired, and then, based on the eviction policy information, incomplete eviction of cached data items can be achieved. That is, some of the cached metadata items (the corresponding cached data items) in the cached weight queue are evicted, and the others are retained, thereby improving the performance of applications and business functions.

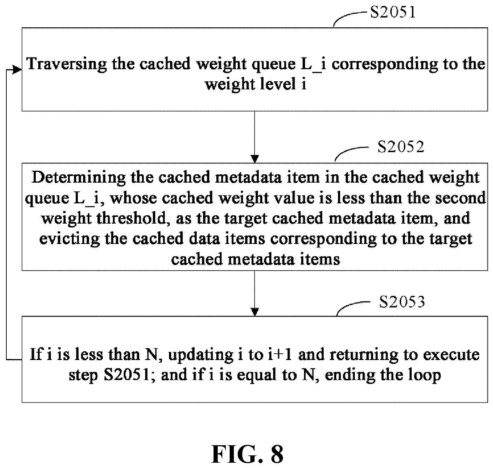

Specifically, in an implementation, the eviction strategy information includes the second weight threshold. As shown in FIG. 8, a specific implementation of the step S205 includes the following.

Step S2051: Traversing the cached weight queue L_i corresponding to the weight level i;

Step S2052: Determining the cached metadata item in the cached weight queue L_i, whose cached weight value is less than the second weight threshold, as the target cached metadata item, and evicting the cached data items corresponding to the target cached metadata items.

Step S2053: If i is less than N, updating i to i+1 and returning to execute step S2051; and if i is equal to N, ending the loop.

As shown in the above figure, i is, for example, an integer greater than or equal to 1, and N is the number of the weight levels. Exemplarily, starting from weight level i = 1, respective cached metadata items in the cached weight queue L_1 are traversed firstly. Then based on the second weight threshold in the eviction policy information, the cached metadata item that is less than or equal to the second weight threshold is determined as the target cached metadata item, and the cached data items corresponding to the target cached metadata items are evicted. Afterwards, it is determined whether the weight level i is the last weight level (i.e., the highest weight level). If the weight level i is not the last weight level (i.e., i is less than N), the next cached weight queue needs to be processed. At this time, i is updated to be i+1 (i.e., i = i+1), and jump back to execute step S2051. The above processing steps are repeated for the cached weight queue L_2. If the weight level i is determined to be the last weight level (i.e., i is equal to N), it is considered that all cached weight queues have been traversed, and the loop ends.

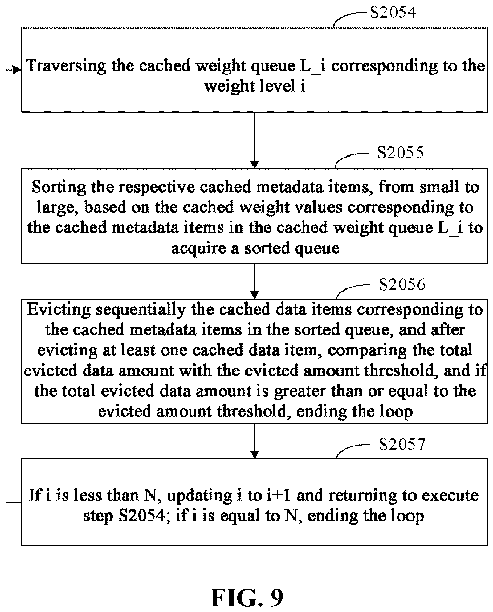

In another implementation, the eviction strategy information includes an evicted amount threshold. As shown in FIG. 9, a specific implementation of step S205 includes the following.

Step S2054: Traversing the cached weight queue L_i corresponding to the weight level i;

Step S2055: Sorting the respective cached metadata items, from small to large, based on the cached weight values corresponding to the cached metadata items in the cached weight queue L_i, to acquire a sorted queue;

Step S2056: Evicting sequentially the cached data items corresponding to the cached metadata items in the sorted queue, and after evicting at least one cached data item, comparing the total evicted data amount with the evicted amount threshold, and if the total evicted data amount is greater than or equal to the evicted amount threshold, ending the loop;

Step S2057: If i is less than N, updating i to i+1 and returning to execute step S2054; if i is equal to N, ending the loop.

As shown in the above figure, i is, for example, an integer greater than or equal to 1, and N is the number of the weight levels. Exemplarily, starting from weight level i = 1, the respective cached metadata items in the cached weight queue L_1 are traversed firstly, and then the respective cached metadata items are sorted from small to large based on the cached weight values, to acquire a sorted queue. For example, the cache metadata in the cached weight queue L_1 are sorted based on the cached weight values. And a sorted queue rL_1 is acquired, and the queue length of the sorted queue rL_1 is consistent with the queue length of the cached weight queue L_1. Afterwards, the cached data items corresponding to the cached metadata items in the sorted queue are evicted in sequence. For example, the sorted queue rL_1 is: [P1, P4, P5, P2...], where the cached weight values corresponding to the cached metadata items P1, P4, P5, and P2 are 1, 1, 2, and 3, respectively. Afterwards, for the sorted queue rL_1, the cached data items corresponding to the cached metadata items therein are evicted in sequence in the order of P1, P4, P5, and P2. And after at least one of the cached data items are evicted, the total evicted data amount and the evicted amount threshold are compared, wherein the evicted data amount and the evicted amount threshold may be referred to as the data volume of the file, or the number of the files. For example, after the cached data items corresponding to P1 and P4 are evicted, the total evicted amount is 100Mb, and the evicted amount threshold is 200Mb, thus the total evicted data amount is less than or equal to the evicted amount threshold. After the cached data items corresponding to P5 and P2 are evicted, the total evicted amount is 220Mb, thus the total evicted data amount is greater than or equal to the evicted amount threshold. If the total evicted data amount is greater than or equal to the evicted amount threshold, the loop is exited immediately. That is, the eviction process of the cached data is ended. On the other hand, if the total evicted data amount is still less than the evicted amount threshold after all cached data items corresponding to the cached metadata items in the sorted queue rL_1 are evicted, step S2057 is executed. The implementation process of this step can refer to the introduction in the embodiment shown in FIG. 8.

In the embodiment, by comparing the total evicted data amount and the evicted amount threshold, more accurate control over stopping the eviction of cached data are achieved, thereby the control accuracy and effect of the eviction of cached data are improved.

Optionally, after step S205 is completed, the following steps are further included.

Step S206: Decaying the cached weight values of the non-target cached metadata items in the cached weight queue to acquire an updated cached weight queue, and returning to step S201.

Exemplarily, after the cached data items corresponding to the cached metadata items in the cached weight queue are evicted, in order to further improve the accuracy and effect of the eviction of cached data, in the embodiment, the cached weight values of the cached metadata items in the cached weight queue are further updated by combining the impact of the duration of the cached data items. Specifically, the cached weight values of the non-target cached metadata items in the cached weight queue are decayed to acquire an updated cached weight queue. For example, for the non-target cached metadata items that have not been evicted in the cached weight queue, their cached weight values are halved, or their cached weight values are subtracted by a fixed value, such as 1, thereby achieving the decay of the cached weight value. Through the above steps, even the cached metadata item with a large cached weight value will gradually become smaller over time, thereby achieving the purpose of evicting the corresponding cached data items. Combined with the updated scheme of the cached weight value provided in the embodiment (i.e., the number of access increases the weight value, and the time of access reduces the weight value), after the above step of the decaying, it can achieve the effect that in the current cached weight value, the older the number of access is, the smaller its proportion is, and the newer the number of access, the larger its proportion is.

Furthermore, the method further includes: after the cached weight values of the non-target cached metadata items in the cached weight queue are decayed to acquire an updated cached weight queue, assigning, based on the cached weight value in the updated cached weight queue, the corresponding cached metadata item to the cached weight queue with a corresponding weight level. In the embodiment, the cached metadata item in the cached weight queue can be re-assigned only after the cached weight values of the non-target cached metadata items in the cached weight queue are decayed, thereby reducing the number of operations on the cached weight queue, downgrading system resource overhead, and improving system stability.

The following is a more specific introduction to real-time performance. For example, there are two cached data items A and B. Data item A has been accessed sequentially 5 times, 4 times, 3 times, 2 times, and 1 time per second in the past 5 seconds, that is, the access frequency is slowly decreasing. The cached data item B is the opposite. The cached data item B has been accessed sequentially 2 times, 3 times, 4 times, 5 times, and 1 time per second in the past 5 seconds. The two have the same recent time of access, and the same access frequency in the last second. Whether by the Least Recently Used (LRU) algorithm or the Least Frequently Used (LFU) algorithm, it is impossible to determine which one should be evicted. However, through the above-mentioned decay processing steps provided in the embodiment, the cached weight value of cached data item A is smaller, therefore the cached data item A can be evicted before the cached data item B, thereby improving the accuracy and effect of the eviction of the data.

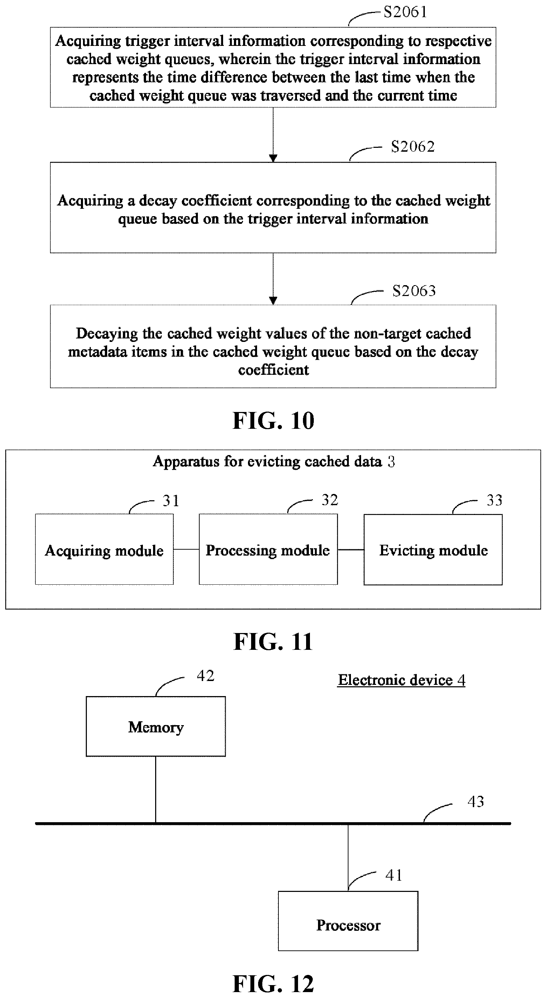

Exemplarily, as shown in FIG. 10, the specific implementation of step S206 includes the following.
Step S2061: Acquiring trigger interval information corresponding to respective cached weight queues, wherein the trigger interval information represents the time difference between the last time when the cached weight queue was traversed and the current time;
Step S2062: Acquiring a decay coefficient corresponding to the cached weight queue based on the trigger interval information;
Step S2063: Decaying the cached weight values of the non-target cached metadata items in the cached weight queue based on the decay coefficient.

Exemplarily, after each eviction, the server records the cached weight queue used for this eviction, or the weight level corresponding to the evicted cached data items. For example, after this eviction is completed, the cached weight queue L_1 corresponding to weight level I and the cached weight queue L_2 corresponding to weight level II are traversed, and the cached data items corresponding to the target cached metadata items in the cached weight queue L_1 and the cached weight queue L_2 are evicted. The cached weight queue L_3 is not traversed in this eviction of the cache, the cached data items corresponding to the cached metadata items in the cached weight queue L_3 are not evicted. In this case, assuming that the time difference between the last time the cached weight queue L_1 and cached weight queue L_2 were traversed and the current time is 0, the time difference 0 is the trigger interval information corresponding to the cached weight queue L_1 and the cached weight queue L_2. And since the cached weight queue L_3 is not triggered in this round, the time difference between the last time the cached weight queue L_3 was traversed and the current time is 1, and the time difference 1 is the trigger interval information corresponding to the cached weight queue L_3. Further, based on the trigger interval information, the corresponding decay coefficient is acquired. There can be a preset mapping relationship between the trigger interval information and the corresponding decay coefficient. For example, the decay coefficient = the trigger interval information + 1. Therefore, the decay coefficient corresponding to the cached weight queue L_1 and the cached weight queue L_2 is 1. The decay coefficient corresponding to cached weight queue L_3 is 2. Afterwards, the cached weight value is decayed based on the decay coefficient. For example, the cached weight values of all non-target cached metadata items in the cached weight queue L_1 and the cached weight queue L_2 are subtracted by the decay coefficient 1. The cached weight values of all non-target cached metadata items in the cached weight queue L_3 are subtracted by the decay coefficient 2. Of course, in other possible implementations, the decay coefficient can also have other implementations and usages, for example, the decay coefficient is a decimal less than 1 and greater than 0, which is mapped to the trigger interval information. And the cached weight values of the non-target cached metadata items can be decayed by multiplying the decay coefficient by the cached weight values of the non-target cached metadata items.

In the embodiment, the corresponding decay coefficient is determined by the trigger interval information, and then the non-target cached metadata items can be decayed based on the decay coefficient, so that the decay amount of the cached metadata item increases with the increase of the trigger interval. Therefore, by further combining the influence of the time factor on the hotness and coldness of the cached data, the accuracy of the eviction of the cached data can be improved.

Optionally, in the embodiment, the following steps are also included.

Step S200A: Creating the cached metadata item corresponding to the cached data item.

Step S200B: In response to determining that the cached data item is accessed, increasing the cached weight value in the cached metadata item corresponding to the cached data item.

Step S200C: In response to determining that the cached data item has not been accessed for more than a preset time period, decaying the cached weight value in the cached metadata item corresponding to the cached data item.

Referring to the relevant introduction of step S100A, step S100B, and step S100C in the embodiment shown in FIG. 3, when the above steps are executed in the embodiment, in addition to the cached metadata item in the real-time weight queue can be updated, the cached metadata item in the cached weight queue can also be updated. Similar to step S100A, step S100B, and step S100C, the above step S200A, step S200B, and step S200C can be executed multiple times, either sequentially or in parallel, and their order of execution may also change. Step S200A, step S200B, and step S200C are steps that are executed independently and continuously, and are independent of whether other steps are executed. After the above steps, the cached metadata item in the cached weight queue will be in a dynamically changing state. Combined with the process of decaying the cache metadata in step S206, the hot and cold states of the cached data items can be better represented. Thus, the cache metadata in the cached weight queue can be adjusted dynamically and the accuracy of the eviction of cached data can be improved.

In the embodiment, the implementation of step S201 is the same as the implementation of step S101 in the embodiment shown in FIG. 2 of the present disclosure, and will not be described in detail here.

Corresponding to the method for evicting cached data in the above embodiment, FIG. 11 is a structural block diagram of the apparatus for evicting cached data provided in the embodiment of the present disclosure. The method introduced in the above embodiment can be executed by the apparatus for evicting cached data, and the apparatus can be implemented by software and/or hardware. The apparatus can be integrated in an electronic device with certain data processing functions. The electronic device can include but is not limited to mobile terminals with big data processing capabilities, as well as fixed terminals with big data processing capabilities such as desktop computers and supercomputers.

For ease of explanation, only the parts related to the embodiment of the present disclosure are shown. Referring to FIG. 11, the apparatus for evicting cached data includes an acquiring module 31, a processing module 32 and an evicting module 33.

The acquiring module 31 is configured to acquire cached metadata item in a real-time weight queue, wherein the cached metadata item comprises a cached weight value, and the cached weight value are dynamically updated at least based on a number of access and/or time of access to a corresponding cached data item.

The processing module 32 is configured to assign the cached metadata item to a cached weight queue with a corresponding weight level based on the cached weight value in the cached metadata item, wherein different weight levels correspond to different weight ranges of the cached weight values.

The evicting module 33 is configured to determine, in response to a cache eviction instruction, at least one target cached weight queue based on the weight level, and evict sequentially cached data items corresponding to target cached metadata items in the at least one target cached weight queue.

According to one or more embodiments of the present disclosure, the acquiring module 31 is further configured to perform the following: when the first cached data item is received, initially creating a corresponding cached metadata item, and configuring the cached weight value of the first cached data item as a default weight value; wherein the first cached data item is any of the cached data items; recording a number of access and/or time of access to the first cached data item dynamically, and updating the cached weight value of the first cached data item dynamically based on the number and/or the time of the access to the first cached data item, wherein the cached weight value is positively correlated with the number of the access and negatively correlated with a duration from the time of the access to current time, and the cached weight value represents the probability that the cached data item needs to continue being cached.

According to one or more embodiments of the present disclosure, the acquiring module 31 is further configured to perform at least one of the followings: creating the cached metadata item corresponding to the cached data item; in response to the cached data item being accessed, increasing the cached weight value in the cached metadata item corresponding to the cached data item; in response to the cached data item having not been accessed for more than a preset time period, decaying the cached weight value in the cached metadata item corresponding to the cached data item.

According to one or more embodiments of the present disclosure, the cached weight queue includes a first-level cached weight queue and at least one second-level cached weight queue. The processing module 32 is configured to perform the following: in respond to determining that the queue length of the real-time weight queue reaches the target length, pushing the cached metadata item at the queue head of the real-time weight queue to the queue tail of the first-level cached weight queue; and based on the cached weight values of respective cached metadata items in the first-level cached weight queue, assigning at least one cached metadata item in the first-level cached weight queue to the second-level cached weight queue with a corresponding weight level.

According to one or more embodiments of the present disclosure, the processing module 32 is specifically configured to, when based on the cached weight values of the respective cached metadata items in the first-level cached weight queue, assigning at least one cached metadata item in the first-level cached weight queue to the second-level cached weight queue with a corresponding weight level, perform the following: acquiring the high-frequency cached metadata items in the first-level cached weight queue whose cached weight values are greater than the first weight threshold, and assigning the respective high-frequency cached metadata items to the second-level cached weight queue with a corresponding weight level based on the cached weight values corresponding to the high-frequency cached metadata items; and retaining, in the first-level cached weight queue, the low-frequency cached metadata items whose cached weight values are less than the first weight threshold.

According to one or more embodiments of the present disclosure, the evicting module 33 is specifically configured to perform the following: acquiring preset eviction policy information, wherein the eviction policy information represents a rule for evicting cached data items; and based on the eviction policy information and the order of the weight levels, processing sequentially the cached weight queues corresponding to at least one of the weight levels, to acquire the target cached metadata items in the cached weight queue, and evicting the cached data items corresponding to the target cached metadata items.

According to one or more embodiments of the present disclosure, the eviction policy information comprises a second weight threshold. The evicting module 33 is specifically configured to, when based on the eviction policy information and the order of the weight levels, processing sequentially the cached weight queues corresponding to at least one of the weight levels to acquire the target cached metadata items in the cached weight queue, and evicting the cached data items corresponding to the target cached metadata items, perform the following: traversing sequentially the cached weight queues corresponding to the respective weight levels based on the order of the weight levels, determining cached metadata item in current cached weight queue whose cached weight value is less than the second weight threshold as the target cached metadata item, and evicting the cached data item corresponding to the target cached metadata item.

According to one or more embodiments of the present disclosure, the eviction policy information comprises an evicted amount threshold. The evicting module 33 is specifically configured to, when processing sequentially the cached weight queues corresponding to the at least one of the weight levels based on the eviction policy information and the order of the weight levels to acquire the target cached metadata items in the cached weight queue, and evicting the cached data items corresponding to the target cached metadata items, perform the following: traversing sequentially the cached weight queues corresponding to the respective weight levels based on the order of the weight levels, sorting respective cached metadata items from small to large based on the cached weight values corresponding to respective cached metadata items in current cached weight queue to acquire a sorted queue, and evicting sequentially the cached data items corresponding to the cached metadata items in the sorted queue until a total evicted data amount is greater than or equal to the evicted amount threshold.

According to one or more embodiments of the present disclosure, the processing module 32 is further configured to, after evicting the cached data items corresponding to the target cached metadata items, decay the cached weight values of the non-target cached metadata items in the cached weight queue to acquire an updated cached weight queue.

According to one or more embodiments of the present disclosure, the processing module 32 is further configured to, when decaying the cached weight values of the non-target cached metadata items in the cached weight queue to acquire the updated cached weight queue, perform the following: acquiring trigger interval information corresponding to the respective cached weight queues, wherein the trigger interval information represent a time difference between last time when the cached weight queue was traversed and current time; acquiring a decay coefficient corresponding to the cached weight queue based on the trigger interval information; and decaying the cached weight values of the non-target cached metadata items in the cached weight queue based on the decay coefficient.

According to one or more embodiments of the present disclosure, the processing module 32 is further configured to, after decaying the cached weight values of the non-target cached metadata items in the cached weight queue to acquire the updated cached weight queue, perform the following: assigning the corresponding cached metadata item to the cached weight queue with a corresponding weight level, based on cached weight value in the updated cached weight queue.

The acquiring module 31, the processing module 32 and the evicting module 33 are connected in sequence. The apparatus 3 for evicting cached data provided in the embodiment can implement the technical solution of the above method embodiment, and its implementation principle and technical effect are similar, which will not be repeated in the embodiment.

FIG. 12 is a schematic diagram of the structure of an electronic device provided in an embodiment of the present disclosure. As shown in FIG. 12, the electronic device 4 includes a processor 41, and a memory 42 communicatively connected to the processor 41.

The memory 42 stores computer-executable instructions. The processor 41 executes the computer execution instructions stored in the memory 42 to implement the method for evicting cached data in the embodiments shown in FIG. 2 to FIG. 10.

Optionally, the processor 41 and the memory 42 are connected via a bus 43.

The relevant descriptions can be understood by referring to the relevant descriptions and effects corresponding to the steps in the embodiments corresponding to FIG. 2 to FIG. 10, and no further details will be given here.

An embodiment of the present disclosure provides a non-transitory computer-readable storage medium, in which computer-executable instructions are stored. When the computer-executable instructions are executed by a processor to implement the method for evicting cached data provided in any of the embodiments corresponding to FIG. 2 to FIG. 10 of the present disclosure.

An embodiment of the present disclosure provides a computer program product including a computer program. When the computer program is executed by a processor causing to implement the method for evicting cached data provided in any of the embodiments corresponding to FIG. 2 to FIG. 10 of the present disclosure.

In order to implement the above embodiment, the embodiment of the present disclosure also provides an electronic device.

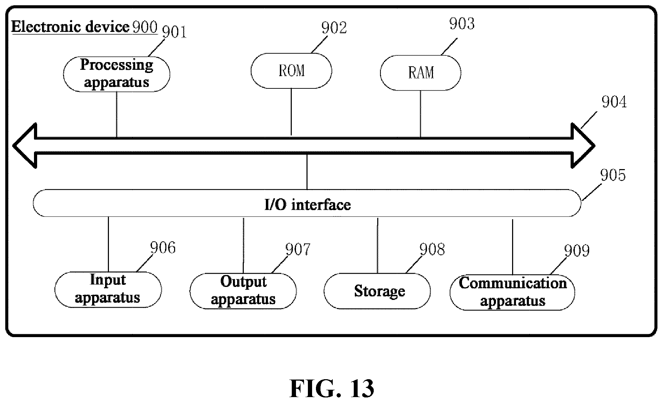

Referring to FIG. 13, it shows a schematic diagram of the structure of an electronic device 900 suitable for implementing the embodiments of the present disclosure. The electronic device 900 may be a terminal device or a server. The terminal device may include but is not limited to mobile terminals such as mobile phones, laptop computers, digital broadcast receivers, Personal Digital Assistants (PDAs), Portable Android Devices (PADs), Portable Media Players (PMPs), vehicle-mounted terminals (such as vehicle-mounted navigation terminals), etc., and fixed terminals such as digital TVs, desktop computers, etc. The electronic device shown in FIG. 13 is only an example and should not impose any limitations on the functions and scope of use of the embodiments of the present disclosure.

As shown in FIG. 13, the electronic device 900 may include a processing apparatus (e.g., a central processing unit, a graphics processing unit, etc.) 901, which may perform various appropriate actions and processes according to a program stored in a Read Only Memory (ROM) 902 or a program loaded from a storage 908 to a Random Access Memory (RAM) 903. Various programs and data required for the operation of the electronic device 900 are also stored in the RAM 903. The processing apparatus 901, the ROM 902, and the RAM 903 are connected to each other via a bus 904. An input/output (I/O) interface 905 is also connected to the bus 904.

Typically, the following apparatus may be connected to the I/O interface 905: an input apparatus 906 including, for example, a touch screen, a touchpad, a keyboard, a mouse, a camera, a microphone, an accelerometer, a gyroscope, etc.; an output apparatus 907 including, for example, a Liquid Crystal Display (LCD), a speaker, a vibrator, etc.; a storage 908 including, for example, a magnetic tape, a hard disk, etc.; and a communication apparatus 909. The communication apparatus 909 may allow the electronic device 900 to communicate with other devices wirelessly or by wire to exchange data. Although FIG. 13 shows the electronic device 900 with various apparatus, it should be understood that it is not required to implement or have all the apparatus shown. More or fewer apparatus may be implemented or have alternatively.

In particular, according to an embodiment of the present disclosure, the process described above with reference to the flowchart can be implemented as a computer software program. For example, an embodiment of the present disclosure includes a computer program product, which includes a computer program carried on a computer-readable medium, and the computer program contains program code for executing the method shown in the flowchart. In such an embodiment, the computer program can be downloaded and installed from a network by a communication apparatus 909, or installed from a storage 908, or installed from a ROM 902. When the computer program is executed by the processing apparatus 901, the above-mentioned functions defined in the method of the embodiment of the present disclosure are executed.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. Computer readable signal media may also be any computer readable medium other than computer readable storage media, which may send, propagate or transmit a program for use by or in combination with an instruction execution system, apparatus or device. The program code contained on the computer readable medium may be transmitted using any appropriate medium, including but not limited to: wires, optical cables, RF (radio frequency), etc., or any suitable combination of the above.

The computer-readable medium may be included in the electronic device, or may exist independently without being installed in the electronic device.

The computer-readable medium carries one or more programs. When the one or more programs are executed by the electronic device, causing the electronic device to execute the method shown in the above embodiment.

Computer program code for performing the operations disclosed herein can be written in one or more programming languages or a combination thereof, including object-oriented programming languages such as Java, Smalltalk, C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In the case of a remote computer, the remote computer may be connected to the user's computer via any type of network, including a Local Area Network (LAN) or a Wide Area Network (WAN), or may be connected to an external computer (e.g., via the Internet using an Internet service provider).

The flow chart and block diagram in the accompanying drawings illustrate the possible architecture, function and operation of the system, method and computer program product according to various embodiments of the present disclosure. In this regard, each box in the flow chart or block diagram can represent a module, a program segment or a part of a code, and the module, the program segment or a part of the code contains one or more executable instructions for realizing the specified logical function. It should also be noted that in some implementations as replacements, the functions marked in the box can also occur in an order different from that marked in the accompanying drawings. For example, two boxes represented in succession can actually be executed substantially in parallel, and they can sometimes be executed in the opposite order, depending on the functions involved. It should also be noted that each box in the block diagram and/or flow chart, and the combination of the boxes in the block diagram and/or flow chart can be implemented with a dedicated hardware-based system that performs a specified function or operation, or can be implemented with a combination of dedicated hardware and computer instructions.

The units or module involved in the embodiments described in the present disclosure may be implemented by software or hardware. The name of the unit or module does not limit the unit itself in some cases.

The functions described above herein may be performed at least in part by one or more hardware logic components. For example, without limitation, exemplary types of hardware logic components that may be used include: field programmable gate arrays (FPGAs), application specific integrated circuits (ASICs), application specific standard products (ASSPs), systems on chips (SOCs), complex programmable logic devices (CPLDs), and the like.

In the context of the present disclosure, a machine-readable medium may be a tangible medium that may contain or store a program for use by or in conjunction with an instruction execution system, apparatus, or device. A machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. A more specific example of a machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

In a first aspect, according to one or more embodiments of the present disclosure, a method for evicting cached data is provided. The method comprises: acquiring cached metadata item in a real-time weight queue, wherein the cached metadata item comprise a cached weight value, and the cached weight value is dynamically updated at least based on a number of access and/or time of access to a corresponding cached data item; assigning the cached metadata item to a cached weight queue with a corresponding weight level based on the cached weight value in the cached metadata item, wherein different weight levels correspond to different weight ranges of cached weight values; and in response to a cache eviction instruction, determining at least one target cached weight queue based on the weight level, and evicting sequentially cached data items corresponding to target cached metadata items in the at least one target cached weight queue.

According to one or more embodiments of the present disclosure, the method further comprises: in response to a first cached data item being received, creating a corresponding cached metadata item initially, and configuring a cached weight value of the first cached data item as a default weight value, wherein the first cached data item is any cached data item; and recording a number of access and/or time of access to the first cached data item dynamically, and updating the cached weight value of the first cached data item dynamically based on the number of the access and/or the time of the access to the first cached data item, wherein the cached weight value is positively correlated with the number of the access and negatively correlated with a duration from the time of the access to current time, and the cached weight value represents a probability that the cached data item still needs to continue being cached.

According to one or more embodiments of the present disclosure, the cached weight queue comprises a first-level cached weight queue and at least one second-level cached weight queue. Wherein the assigning the cached metadata item to the cached weight queue with the corresponding weight level based on the cached weight value in the cached metadata item comprises: in respond to a queue length of the real-time weight queue reaching a target length, pushing a cached metadata item at a queue head of the real-time weight queue to a queue tail of the first-level cached weight queue; and assigning, based on the cached weight values of respective cached metadata items in the first-level cached weight queue, at least one cached metadata item in the first-level cached weight queue to the second-level cached weight queue with a corresponding weight level.

According to one or more embodiments of the present disclosure, assigning, based on the cached weight values of respective cached metadata items in the first-level cached weight queue, the at least one cached metadata item in the first-level cached weight queue to the second-level cached weight queue with the corresponding weight level comprises: acquiring a high-frequency cached metadata item in the first-level cached weight queue whose cached weight value is greater than a first weight threshold, and assigning the high-frequency cached metadata item to the second-level cached weight queue with the corresponding weight level based on the cached weight value corresponding to the high-frequency cached metadata item; and retaining, in the first-level cached weight queue, a low-frequency cached metadata item whose cached weight value is less than the first weight threshold.

According to one or more embodiments of the present disclosure, determining the at least one target cached weight queue based on the weight level, and evicting sequentially the cached data items corresponding to the target cached metadata items in the at least one target cached weight queue, comprise: acquiring preset eviction policy information, wherein the eviction policy information represents a rule for evicting cached data items; and processing sequentially the cached weight queues corresponding to at least one of the weight levels based on the eviction policy information and an order of the weight levels, to acquire the target cached metadata items in the cached weight queue, and evicting cached data items corresponding to the target cached metadata items.

According to one or more embodiments of the present disclosure, the eviction policy information comprises a second weight threshold. The processing sequentially the cached weight queues corresponding to the at least one of the weight levels based on the eviction policy information and the order of the weight levels to acquire the target cached metadata items in the cached weight queue, and evicting the cached data items corresponding to the target cached metadata items, comprise: traversing sequentially the cached weight queues corresponding to the respective weight levels based on the order of the weight levels, and performing: determining a cached metadata item in a current cached weight queue whose cached weight value is less than the second weight threshold as the target cached metadata item, and evicting cached data item corresponding to the target cached metadata item.

According to one or more embodiments of the present disclosure, the eviction policy information comprises an evicted amount threshold. Wherein processing sequentially the cached weight queues corresponding to the at least one of the weight levels based on the eviction policy information and the order of the weight levels to acquire the target cached metadata items in the cached weight queue, and evicting the cached data items corresponding to the target cached metadata items, comprise: traversing sequentially the cached weight queues corresponding to the respective weight levels based on the order of the weight levels, and performing: sorting respective cached metadata items from small to large based on the cached weight values corresponding to respective cached metadata items in current cached weight queue, to acquire a sorted queue; and evicting sequentially cached data items corresponding to cached metadata items in the sorted queue, until a total evicted data amount is greater than or equal to the evicted amount threshold.

According to one or more embodiments of the present disclosure, the method further comprises: after evicting the cached data items corresponding to the target cached metadata items, decaying a cached weight value of a non-target cached metadata items in the cached weight queue to acquire an updated cached weight queue.

According to one or more embodiments of the present disclosure, decaying the cached weight value of the non-target cached metadata item in the cached weight queue to acquire the updated cached weight queue comprises: acquiring trigger interval information corresponding to respective cached weight queues, wherein the trigger interval information represents a time difference between last time when the cached weight queue was traversed and current time; acquiring a decay coefficient corresponding to the cached weight queue based on the trigger interval information; and decaying the cached weight value of the non-target cached metadata item in the cached weight queue based on the decay coefficient.

According to one or more embodiments of the present disclosure, the method further comprises: after decaying the cached weight value of the non-target cached metadata item in the cached weight queue to acquire the updated cached weight queue, assigning, based on cached weight value in the updated cached weight queue, a corresponding cached metadata item to a cached weight queue with a corresponding weight level.

In a second aspect, according to one or more embodiments of the present disclosure, an apparatus for evicting cached data is provided. The apparatus comprises: an acquiring module configured to acquire a cached metadata item in a real-time weight queue, wherein the cached metadata item comprises a cached weight value, and the cached weight value is dynamically updated at least based on a number of access and/or time of access to a corresponding cached data item; a processing module configured to assign the cached metadata item to a cached weight queue with a corresponding weight level based on the cached weight value in the cached metadata item, wherein different weight levels correspond to different weight ranges of cached weight values; and an evicting module configured to determine, in response to a cache eviction instruction, at least one target cached weight queue based on the weight level, and evict sequentially cached data items corresponding to target cached metadata items in the at least one target cached weight queue.

According to one or more embodiments of the present disclosure, the acquiring module is further configured to perform the following: in response to the first cached data item being received, initially creating a corresponding cached metadata item, and configuring the cached weight value of the first cached data item as a default weight value; wherein the first cached data item is any of the cached data items; recording a number of access and/or time of access to the first cached data item dynamically, and updating the cached weight value of the first cached data item dynamically based on the number and/or the time of the access to the first cached data item, wherein the cached weight value is positively correlated with the number of the access and negatively correlated with a duration from the time of the access to current time, and the cached weight value represents the probability that the cached data item needs to continue being cached.

According to one or more embodiments of the present disclosure, the acquiring module is further configured to perform at least one of the followings: creating the cached metadata item corresponding to the cached data item; in response to the cached data item being accessed, increasing the cached weight value in the cached metadata item corresponding to the cached data item; in response to the cached data item having not been accessed for more than a preset time period, decaying the cached weight value in the cached metadata item corresponding to the cached data item.

According to one or more embodiments of the present disclosure, the cached weight queue includes a first-level cached weight queue and at least one second-level cached weight queue. The processing module is configured to perform the following: in respond to determining that the queue length of the real-time weight queue reaches the target length, pushing the cached metadata item at the queue head of the real-time weight queue to the queue tail of the first-level cached weight queue; and based on the cached weight values of the respective cached metadata items in the first-level cached weight queue, assigning at least one cached metadata item in the first-level cached weight queue to the second-level cached weight queue with a corresponding weight level.

According to one or more embodiments of the present disclosure, the processing module is specifically configured to, when based on the cached weight values of the respective cached metadata items in the first-level cached weight queue, assigning at least one cached metadata item in the first-level cached weight queue to the second-level cached weight queue with a corresponding weight level, perform the following: acquiring high-frequency cached metadata items in the first-level cached weight queue whose cached weight values are greater than the first weight threshold, and assigning the respective high-frequency cached metadata items to the second-level cached weight queue with a corresponding weight level based on the cached weight values corresponding to the high-frequency cached metadata items; and retaining the low-frequency cached metadata items whose cached weight values are less than the first weight threshold, in the first-level cached weight queue.

According to one or more embodiments of the present disclosure, the evicting module is specifically configured to perform the following: acquiring preset eviction policy information, wherein the eviction policy information represents a rule for evicting cached data items; and based on the eviction policy information and the order of the weight levels, processing sequentially the cached weight queues corresponding to at least one of the weight levels to acquire the target cached metadata items in the cached weight queue, and evicting the cached data items corresponding to the target cached metadata items.

According to one or more embodiments of the present disclosure, the eviction policy information comprises a second weight threshold. The evicting module is specifically configured to, when based on the eviction policy information and the order of the weight levels, processing sequentially the cached weight queues corresponding to at least one of the weight levels to acquire the target cached metadata items in the cached weight queue, and evicting the cached data items corresponding to the target cached metadata items, perform the following: traversing sequentially the cached weight queues corresponding to the respective weight levels based on the order of the weight levels, and perform the following: determining the cached metadata item in current cached weight queue whose cached weight value is less than the second weight threshold as the target cached metadata item, and evicting the cached data item corresponding to the target cached metadata item.

According to one or more embodiments of the present disclosure, the eviction policy information comprises an evicted amount threshold. The evicting module 33 is specifically configured to, when processing sequentially the cached weight queues corresponding to the at least one of the weight levels based on the eviction policy information and the order of the weight levels to acquire the target cached metadata items in the cached weight queue, and evicting the cached data items corresponding to the target cached metadata items, perform the following: traversing sequentially the cached weight queues corresponding to the respective weight levels based on the order of the weight levels, and performing the following: sorting the respective cached metadata items from small to large based on the cached weight values corresponding to the respective cached metadata items in current cached weight queue to acquire a sorted queue; and evicting sequentially cached data items corresponding to cached metadata items in the sorted queue until a total evicted data amount is greater than or equal to the evicted amount threshold.

According to one or more embodiments of the present disclosure, the processing module is further configured to, after evicting the cached data items corresponding to the target cached metadata items, perform the following: decaying the cached weight values of the non-target cached metadata items in the cached weight queue to acquire an updated cached weight queue.

According to one or more embodiments of the present disclosure, the processing module is further configured to, when decaying the cached weight values of the non-target cached metadata items in the cached weight queue to acquire the updated cached weight queue, perform the following: acquiring trigger interval information corresponding to the respective cached weight queues, wherein the trigger interval information represents a time difference between last time when the cached weight queue was traversed and current time; acquiring a decay coefficient corresponding to the cached weight queue based on the trigger interval information; and decaying the cached weight values of the non-target cached metadata items in the cached weight queue based on the decay coefficient.

According to one or more embodiments of the present disclosure, the processing module is further configured to, after decaying the cached weight values of the non-target cached metadata items in the cached weight queue to acquire the updated cached weight queue, perform the following: assigning the corresponding cached metadata item to the cached weight queue with a corresponding weight level, based on cached weight value in the updated cached weight queue.

In a third aspect, according to one or more embodiments of the present disclosure, an electronic device is provided. The electronic device comprises at least one processor and a memory. Wherein the memory stores computer-executable instructions. And the at least one processor executes the computer-executable instructions stored in the memory, causing the at least one processor to execute the method for evicting cached data as described in the first aspect and various possible designs of the first aspect.

In a fourth aspect, according to one or more embodiments of the present disclosure, a computer-readable storage medium is provided, wherein the computer-executable instructions, when executed by a processor, implement the method for evicting cached data as described in the first aspect and various possible designs of the first aspect.

In a fifth aspect, according to one or more embodiments of the present disclosure, a computer program product comprising a computer program is provided, wherein the computer program, when executed by a processor, implements the method for evicting cached data as described in the first aspect and various possible designs of the first aspect.

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, the above features are replaced with the technical features with similar functions disclosed in the present disclosure (but not limited to) by each other to form a technical solution.

In addition, although each operation is described in a specific order, this should not be understood as requiring these operations to be performed in the specific order shown or in a sequential order. Under certain circumstances, multitasking and parallel processing may be advantageous. Similarly, although some specific implementation details are included in the above discussion, these should not be interpreted as limiting the scope of the present disclosure. Some features described in the context of a separate embodiment can also be implemented in a single embodiment in combination. On the contrary, the various features described in the context of a single embodiment can also be implemented in a plurality of embodiments individually or in any suitable sub-combination mode.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A method for evicting cached data, comprising:
acquiring (S101) a cached metadata item in a real-time weight queue, wherein the cached metadata item comprises a cached weight value, and the cached weight value is dynamically updated at least based on a number of access and/or time of access to a corresponding cached data item;
assigning (S102) the cached metadata item to a cached weight queue with a corresponding weight level based on the cached weight value in the cached metadata item, wherein different weight levels correspond to different weight ranges of cached weight values; and
in response to a cache eviction instruction, determining (S103) at least one target cached weight queue based on the weight level, and evicting sequentially cached data items corresponding to target cached metadata items in the at least one target cached weight queue.

2. The method according to claim 1, further comprising:
in response to a first cached data item being received, creating a corresponding cached metadata item initially, and configuring a cached weight value of the first cached data item as a default weight value, wherein the first cached data item is any cached data item; and
recording a number of access and/or time of access to the first cached data item dynamically, and updating the cached weight value of the first cached data item dynamically based on the number of the access and/or the time of the access to the first cached data item, wherein the cached weight value is positively correlated with the number of the access and negatively correlated with a duration from the time of the access to current time, and the cached weight value represents a probability that the cached data item still needs to continue being cached.

3. The method according to claim 1 or 2, wherein the cached weight queue comprises a first-level cached weight queue and at least one second-level cached weight queue;
wherein assigning the cached metadata item to the cached weight queue with the corresponding weight level based on the cached weight value in the cached metadata item comprises:
in respond to a queue length of the real-time weight queue reaching a target length, pushing (S202) a cached metadata item at a queue head of the real-time weight queue to a queue tail of the first-level cached weight queue; and
assigning (S203), based on the cached weight values of respective cached metadata items in the first-level cached weight queue, at least one cached metadata item in the first-level cached weight queue to the second-level cached weight queue with a corresponding weight level.

4. The method according to claim 3, wherein assigning, based on the cached weight values of the respective cached metadata items in the first-level cached weight queue, the at least one cached metadata item in the first-level cached weight queue to the second-level cached weight queue with the corresponding weight level, comprises:
acquiring (S2031) a high-frequency cached metadata item in the first-level cached weight queue whose cached weight value is greater than or equal to a first weight threshold, and assigning the high-frequency cached metadata item to the second-level cached weight queue with the corresponding weight level based on the cached weight value corresponding to the high-frequency cached metadata item; and
retaining (S2032), in the first-level cached weight queue, a low-frequency cached metadata item whose cached weight value is less than the first weight threshold.

5. The method according to any of claim 1 to 4, wherein determining the at least one target cached weight queue based on the weight level, and evicting sequentially the cached data items corresponding to the target cached metadata items in the at least one target cached weight queue, comprise:
acquiring (S204) preset eviction policy information, wherein the eviction policy information represents a rule for evicting cached data items; and
processing (S205) sequentially the cached weight queues corresponding to at least one of the weight levels based on the eviction policy information and an order of the weight levels, to acquire the target cached metadata items in the cached weight queue, and evicting cached data items corresponding to the target cached metadata items.

6. The method according to claim 5, wherein the eviction policy information comprises a second weight threshold, and wherein processing sequentially the cached weight queues corresponding to the at least one of the weight levels based on the eviction policy information and the order of the weight levels, to acquire the target cached metadata items in the cached weight queue, and evicting the cached data items corresponding to the target cached metadata items, comprise:
traversing sequentially the cached weight queues corresponding to respective weight levels based on the order of the weight levels, and performing:
determining a cached metadata item in a current cached weight queue whose cached weight value is less than the second weight threshold as the target cached metadata item, and evicting the cached data item corresponding to the target cached metadata item.

7. The method according to claim 5, wherein the eviction policy information comprises an evicted amount threshold, and wherein processing sequentially the cached weight queues corresponding to the at least one of the weight levels based on the eviction policy information and the order of the weight levels, to acquire the target cached metadata items in the cached weight queue, and evicting the cached data items corresponding to the target cached metadata items, comprise:
traversing sequentially the cached weight queues corresponding to respective weight levels based on the order of the weight levels, and performing:
sorting respective cached metadata items from small to large based on the cached weight values corresponding to respective cached metadata items in a current cached weight queue, to acquire a sorted queue; and evicting sequentially cached data items corresponding to cached metadata items in the sorted queue, until a total evicted data amount is greater than or equal to the evicted amount threshold.

8. The method according to claim 5, further comprising: after evicting the cached data items corresponding to the target cached metadata items,
decaying (S206) a cached weight value of a non-target cached metadata item in the cached weight queue to acquire an updated cached weight queue.

9. The method according to claim 8, wherein decaying the cached weight value of the non-target cached metadata item in the cached weight queue to acquire the updated cached weight queue comprises:
acquiring (S2061) trigger interval information corresponding to respective cached weight queues, wherein the trigger interval information represents a time difference between last time when the cached weight queue was traversed and current time;
acquiring (S2062) a decay coefficient corresponding to the cached weight queue based on the trigger interval information; and
decaying (S2063) the cached weight value of the non-target cached metadata item in the cached weight queue based on the decay coefficient.

10. The method according to claim 8, further comprising: after decaying the cached weight value of the non-target cached metadata item in the cached weight queue to acquire the updated cached weight queue,
assigning, based on the cached weight value in the updated cached weight queue, a corresponding cached metadata item to a cached weight queue with a corresponding weight level.

11. An apparatus (3) for evicting cached data, comprising:
an acquiring module (31) configured to acquire a cached metadata item in a real-time weight queue, wherein the cached metadata item comprises a cached weight value, and the cached weight value is dynamically updated at least based on a number of access and/or time of access to a corresponding cached data item;
a processing module (32) configured to assign the cached metadata item to a cached weight queue with a corresponding weight level based on the cached weight value in the cached metadata item, wherein different weight levels correspond to different weight ranges of cached weight values; and
an evicting module (33) configured to determine, in response to a cache eviction instruction, at least one target cached weight queue based on the weight level, and evict sequentially cached data items corresponding to target cached metadata items in the at least one target cached weight queue.

12. An electronic device (4), comprising: a processor (41) and a memory (42); wherein
the memory (42) stores computer-executable instructions; and
the processor (41) executes the computer-executable instructions stored in the memory (42) to cause the processor (41) to execute the method for evicting cached data according to any of claims 1 to 10.

13. A computer-readable storage medium storing computer-executable instructions, wherein the computer-executable instructions, when executed by a processor, implement the method for evicting cached data according to any of claims 1 to 10.

14. A computer program product comprising a computer program, wherein the computer program, when executed by a processor, implement the method for evicting cached data according to any of claims 1 to 10.
